(19) Europäisches Patentamt / European Patent Office / Office européen des brevets

(11) **EP 2 615 679 A1**

(12) **EUROPEAN PATENT APPLICATION**
published in accordance with Art. 153(4) EPC

(43) Date of publication:
**17.07.2013 Bulletin 2013/29**

(51) Int Cl.:
*H01M 10/0567* (2010.01)

(21) Application number: **11823564.7**

(22) Date of filing: **06.09.2011**

(86) International application number:
**PCT/JP2011/070255**

(87) International publication number:
**WO 2012/033089 (15.03.2012 Gazette 2012/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.09.2010 JP 2010199036**

(71) Applicant: **Shin-Kobe Electric Machinery Co., Ltd. Tokyo 104-0044 (JP)**

(72) Inventors:
• **TSUJIKAWA, Tomonobu (JP)**
• **ARAKAWA, Masayasu (JP)**
• **NISHIYAMA, Hiroo (JP)**
• **AICHI, Katsuhide (JP)**

(74) Representative: **Calderbank, Thomas Roger Mewburn Ellis LLP 33 Gutter Lane London EC2V 8AS (GB)**

(54) **NONAQUEOUS ELECTROLYTE BATTERY**

(57) A non-aqueous electrolyte battery providing high safety and having stable battery characteristics in which a flame retardant hardly affects the battery characteristics when the battery is in a use environment and in which flame retardance is imparted to a non-aqueous electrolyte when the battery generates an abnormal amount of heat is provided. A non-aqueous electrolyte battery 1 including a non-aqueous electrolyte 9 and a large number of flame retardant particles added to the non-aqueous electrolyte 9 as the flame retardant is formed. The frame retardant particles are made of a material that exists as a solid and does not perform a function of suppressing ignition when the temperature of the non-aqueous electrolyte 9 is equal to or less than a reference temperature at which the non-aqueous electrolyte 9 is likely to start combustion and that is at least partially liquefied and performs a function of suppressing combustion when the temperature of the non-aqueous electrolyte 9 is more than the reference temperature.

*Fig.1A*

# Fig.1B

**Description**

TECHNICAL FIELD

The present invention relates to a non-aqueous electrolyte battery including a non-aqueous electrolyte and a flame retardant added to the non-aqueous electrolyte.

BACKGROUND ART

Non-aqueous electrolyte batteries that use a non-aqueous electrolyte such as lithium-ion secondary batteries provide a high energy density at a high voltage and have a reduced size and a reduced weight, and thus are widely used primarily as power sources for information terminals such as personal computers and cellular phones. Examples of the non-aqueous electrolyte used in the non-aqueous electrolyte batteries include a solution obtained by dissolving a supporting electrolyte such as $LiPF_6$ in an aprotic organic solvent such as an ester compound and an ether compound. However, since the aprotic organic solvent is flammable, the battery may be disadvantageously ignited or expanded when the battery generates an abnormal amount of heat. Therefore, in the field of the non-aqueous electrolyte batteries, it is requested to manufacture safe non-aqueous electrolyte batteries that are less likely to be ignited or ruptured.

The possibility of expanded use of the non-aqueous electrolyte batteries as power sources for large devices such as power sources for power storage and power sources for electric vehicles has recently been studied. Therefore, also for such application to power sources for large devices, it is necessary to provide safe non-aqueous electrolyte batteries that are less likely to be ignited or ruptured.

Patent Documents 1 to 5 disclose technologies for suppressing ignition or rupture of the non-aqueous electrolyte batteries by adding a flame retardant material to a non-aqueous electrolyte as technologies for enhancing the safety of the batteries. In all of the technologies, a phosphazene compound is used as the flame retardant.

RELATED ART DOCUMENTS

PATENT DOCUMENTS

Patent Document 1: JP06-13108A
Patent Document 2: JP11-144757A
Patent Document 3: JP2000-30740A
Patent Document 4: JP2001-23687A
Patent Document 5: JP2000-173619A

SUMMARY OF INVENTION

TECHNICAL PROBLEM

The phosphazene compound used in the non-aqueous electrolyte batteries according to the related art has a chemical structure with a large amount of a halogen element (in particular, fluorine) to impart high flame retardance to the non-aqueous electrolyte. Therefore, the phosphazene compound has a low boiling point and is liquid at normal temperature because of its chemical structure.

If a phosphazene compound that is liquid at normal temperature is added as a flame retardant to a non-aqueous electrolyte as in the technologies disclosed in Patent Documents 1 to 4, the flame retardant may be dissolved or dispersed in the non-aqueous electrolyte battery at normal temperature to increase the viscosity of the non-aqueous electrolyte and reduce the ion conductivity of the non-aqueous electrolyte. As a result, the battery characteristics (such as high voltage performance, a high discharge capacity, and large current discharge performance) may be disadvantageously reduced when the temperature inside the battery is not increased. In addition, when the temperature inside the battery is increased, the liquid flame retardant may be volatilized from the non-aqueous electrolyte to decrease the amount of the flame retardant existing in the non-aqueous electrolyte. This may disadvantageously reduce the effect of rendering the non-aqueous electrolyte flame-retardant. Further, if the surface of a negative electrode is covered with a flame retardant composed of a phosphazene monomer as in the technology disclosed in Patent Document 5, the liquid phosphazene compound may be disadvantageously vaporized when the temperature is increased. Besides, the flame retardant coating formed on the negative electrode surface may degrade the ion permeability to increase the internal resistance of the battery. This may disadvantageously reduce the battery characteristics.

An object of the present invention is to provide a non-aqueous electrolyte battery capable of preventing ignition or rupture of the battery without reducing the battery characteristics.

Another object of the present invention is to provide a non-aqueous electrolyte battery capable of reliably imparting flame retardance to a non-aqueous electrolyte when the battery generates an abnormal amount of heat.

A still another object of the present invention is to provide a non-aqueous electrolyte battery including a non-aqueous electrolyte and a flame retardant in an amount enough to render the non-aqueous electrolyte flame-retardant.

SOLUTION TO PROBLEM

The present invention improves a non-aqueous electrolyte battery including a non-aqueous electrolyte and a flame retardant added to the non-aqueous electrolyte to suppress ignition (combustion) of the non-aqueous electrolyte due to increased temperature inside the battery. In the non-aqueous electrolyte battery according to the present invention, a large number of flame retardant particles are added as the flame retardant to the non-aqueous electrolyte. The frame retardant particles are particles of a material that exists as a solid and does not perform a function of suppressing combustion when the temperature of the non-aqueous electrolyte is equal to or less than a reference temperature at which the non-aqueous electrolyte is likely to ignite and that is at least partially liquefied and performs a function of suppressing combustion when the temperature of the non-aqueous electrolyte is more than the reference temperature. That is, the flame retardant particles used in the present invention exists as a solid in the non-aqueous electrolyte when the battery is normal (when it is not necessary to perform a function of suppressing ignition of the non-aqueous electrolyte), and at least partially exists as a liquid in the non-aqueous electrolyte when the battery generates an abnormal amount of heat (when it is necessary to perform a function of suppressing ignition of the non-aqueous electrolyte).

According to the present invention, during normal times when the temperature inside the battery is not significantly increased, the solid flame retardant particles are not dissolved (or dispersed) in the non-aqueous electrolyte battery. Therefore, the viscosity of the non-aqueous electrolyte is not increased to reduce the battery characteristics when the battery is normal or in a use environment. When the temperature inside the battery is increased enough to ignite the non-aqueous electrolyte, all or some of the flame retardant particles are liquefied to be dissolved (or dispersed) in the non-aqueous electrolyte battery. Therefore, the flame retardant particles perform a function of suppressing ignition of the non-aqueous electrolyte when the battery generates an abnormal amount of heat. According to the present invention, only some of the flame retardant particles are liquefied because of increased temperature inside the battery (and the flame retardant particles which have not been liquefied remain in the non-aqueous electrolyte as a solid), the whole flame retardant does not volatize (or vaporize) from the non-aqueous electrolyte immediately after being liquefied. This allows the flame retardant to exist in the non-aqueous electrolyte in an amount necessary to suppress ignition of the non-aqueous electrolyte when the battery generates an abnormal amount of heat.

The flame retardant particles used in the present invention preferably exist as a solid in the non-aqueous electrolyte when an internal temperature of the non-aqueous electrolyte battery is equal to or less than 90°C. This prevents use of a non-aqueous electrolyte that ignites at equal to or less than 90°C. The melting point of the flame retardant particles is preferably in the range of 90 to 120°C. Commonly used non-aqueous electrolytes have a pyrolysis temperature of about 150°C which is higher than 120°C. Thus, if the flame retardant particles have a melting point of 90 to 120°C, most of the flame retardant particles are liquefied to perform a function of suppressing ignition before the temperature of the non-aqueous electrolyte reaches the pyrolysis temperature.

The flame retardant particles are preferably particles of a phosphazene compound. The phosphazene compound, because of its structure, has a tendency to capture (trap) oxygen in the non-aqueous electrolyte (for example, oxygen radicals released from the positive electrode when the battery generates an abnormal amount of heat). Utilizing such a tendency, a thermal runaway reaction of the battery can be suppressed by adding particles of the phosphazene compound to the non-aqueous electrolyte.

Examples of the phosphazene compound suitable for use in the present invention include a cyclic phosphazene compound of formula (I):

$$(NPR_2)n \cdots (I)$$

In the cyclic phosphazene compound of formula (I), preferably, n is an integer of 3 or 4, and R's are independently a halogen, an alkoxy group, an aryloxy group, or an amino group. In an example of the cyclic phosphazene compound of formula (I), the n may be an integer of 3, and four of the R's may be chloro groups and the remaining two R's may be aminomethyl groups. In another example of the cyclic phosphazene compound of formula (I), the n may be an integer of 3, and all the R's may be phenoxy groups. If such a phosphazene compound is used, the particles of the phosphazene compound are not easily dissolved (or dispersed) in the non-aqueous electrolyte battery when the internal temperature of the non-aqueous electrolyte battery is equal to or less than 90°C, and at least some of the particles of the phosphazene compound are liquefied to be dissolved (or dispersed) in the non-aqueous electrolyte when the internal temperature of the non-aqueous electrolyte battery is more than 90°C.

When the phosphazene compound described above is used, the amount of the particles of the phosphazene compound added is preferably 3.5 wt% or more per 100 wt% of the non-aqueous electrolyte. If the amount of the phosphazene compound added is less than 3.5 wt% per 100 wt% of the non-aqueous electrolyte, combustion of the non-aqueous electrolyte may not be sufficiently suppressed. The upper limit of the amount of the phosphazene compound added is determined according to the properties and the price of the battery needed. In consideration of the improvement of the flame retardant performance of the non-aqueous electrolyte due to the addition of the phosphazene compound (flame retardant) and the manufacturing cost of the battery, the amount of the phosphazene compound added is preferably less than 14.0 wt% per 100 wt% of the non-aqueous electrolyte.

Further, the average particle size of the particles of the phosphazene compound is preferably 20 μm or less. The phosphazene compound having an average particle size of 20 μm or less is changed from a solid into a liquid at a high rate (liquefaction rate) when the internal temperature of the non-aqueous electrolyte battery is increased. The high liquefaction rate of the phosphazene compound (flame retardant) also increases the rate at which the liquefied phosphazene compound (flame retardant) is further dissolved or dispersed into the non-aqueous electrolyte. As a result, the function of suppressing ignition of the non-aqueous electrolyte can be performed as the internal temperature of the non-aqueous electrolyte battery is increased. A phosphazene compound having an average particle size of more than 20 μm is changed from a solid into a liquid at a low rate (liquefaction rate) when the internal temperature of the non-aqueous electrolyte battery is increased. The lower limit of the average particle size of the particles of the phosphazene compound is not specifically limited. In the current state of the art, however, it is practically difficult to manufacture particles of a phosphazene compound having an average particle size of less than 5 μm. Therefore, the lower limit of the average particle size of the particles of the phosphazene compound may be determined as 5 μm.

BRIEF DESCRIPTION OF DRAWINGS

Fig. 1A is a schematic view showing the inside of a lithium-ion secondary battery used as a non-aqueous electrolyte battery according to the present invention in a transparent state, and Fig. 1B is a cross-sectional view taken along line IB-IB of Fig. 1A.

Fig. 2 shows the relationship between the amount of a phosphazene compound added and the flame retardance of the battery, and the relationship between the amount of a phosphazene compound added and the battery characteristics at the time when the non-aqueous electrolyte battery according to the present invention is internally short-circuited.

Fig. 3 shows the relationship between the amount of another phosphazene compound added and the flame retardance of the battery at the time when the non-aqueous electrolyte battery according to the present invention is internally short-circuited.

Fig. 4 shows the relationship between the average particle size of flame retardant particles (particles of the phosphazene compound) used in the present invention.

Fig. 5 shows the relationship between the melting point of flame retardant particles (particles of the phosphazene compound) used in the present invention and the flame retardance of the battery, and the relationship between the melting point of flame retardant particles (particles of the phosphazene compound) used in the present invention and the battery characteristics.

DESCRIPTION OF EMBODIMENTS

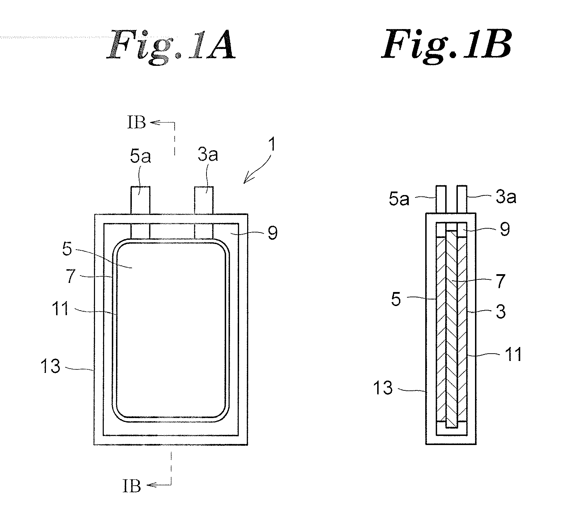

An embodiment of the present invention will be described in detail below. Fig. 1A is a schematic view showing the inside of a lithium-ion secondary battery as a non-aqueous electrolyte battery according to the embodiment of the present invention in a transparent state, and Fig. 1B is a cross-sectional view taken along the line IB-IB of Fig. 1A. A lithium-ion secondary battery 1 includes a positive electrode 3 including a positive lead terminal 3a, a negative electrode 5 including a negative lead terminal 5a, a separator 7 disposed between the positive electrode 3 and the negative electrode 5, and a non-aqueous electrolyte 9 obtained by dissolving a lithium salt in an organic solvent. The positive electrode 3, the negative electrode 5, and the separator 7 are laminated to form a laminated member 11. The laminated member 11 is housed in a case 13 with the positive lead terminal 3a and the negative lead terminal 5a extending out of the case 13 to be connectable. The case 13 is filled with the non-aqueous electrolyte 9 to create a vacuum inside. In the embodiment, the lithium-ion secondary battery 1 was fabricated as follows.

(Fabrication of Positive Electrode)

First, a lithium-cobalt complex oxide ($LiCoO_2$) was prepared as a positive active material of the positive electrode. The lithium-cobalt complex oxide, acetylene black serving as a conducting agent, and polyvinylidene fluoride serving as a binding agent were mixed at a mass ratio of 90: 5: 5, and the mixture was dispersed in a solvent of N-methylpyrrolidone to prepare slurry. The slurry was applied to an aluminum foil serving as a positive current collecting member, and dried. After that, the aluminum foil was subjected to pressing to fabricate a positive electrode sheet. The positive electrode sheet was cut to a size of 10 cm x 20 cm, and a current collecting tab formed from an aluminum foil was welded to the positive electrode sheet to fabricate the positive electrode 3.

(Fabrication of Negative Electrode)

First, artificial graphite was prepared as a negative active material. The artificial graphite and polyvinylidene fluoride serving as a binding agent were mixed at a mass ratio of 90:10, and the mixture was dispersed in a solvent of N-methylpyrrolidone to prepare slurry. The slurry was applied to a copper foil serving as a negative current collecting member, and dried. After that, the copper foil was subjected to pressing to fabricate a negative electrode sheet. The negative electrode sheet was cut to a size of 10 cm x 20 cm, and a current collecting tab formed from a nickel foil was welded to the cut sheet to fabricate the negative electrode 5.

(Fabrication of Laminated Member)

A separator sheet made of polyethylene was interposed between the positive electrode and the negative electrode fabricated as described above. The positive electrode, the negative electrode, and the separator sheet were laminated to fabricate the laminated member 11 having a battery capacity of 8 Ah.

(Preparation of Non-Aqueous Electrolyte)

First, a mixed solvent was prepared from 50 vol% of ethylene carbonate and 50 vol% of dimethyl carbonate. $LiPF_6$ was dissolved in the mixed solvent to achieve a concentration of 1 mol/L to prepare an electrolyte solution. A cyclic phosphazene compound given below was appropriately added as a flame retardant to the prepared electrolyte solution to prepare the non-aqueous electrolyte 9.

(Components and Melting Point of Flame Retardant)

In the examples, the following cyclic phosphazene compounds (phosphazene compounds A to G) were used. A phosphazene compound A is a cyclic phosphazene compound (having a melting point of 99°C) of formula (I), in which n is 3, four of all the R's are chloro groups, and the remaining two R's are aminomethyl groups. A phosphazene compound B is a cyclic phosphazene compound (having a melting point of 110 to 111°C) of formula (I), in which n is 3 and all the six R's are phenoxy groups. A phosphazene compound C is a cyclic phosphazene compound (having a melting point of 20°C) of formula (I), in which n is 3, five of all the R's are chloro groups, and the remaining one R is a phenoxy group. A phosphazene compound D is a cyclic phosphazene compound (having a melting point of 90°C) of formula (I), in which n is 3 and all the six R's are aminopropyl groups. A phosphazene compound E is a cyclic phosphazene compound (having a melting point of 120°C) of formula (I), in which n is 3 and all the six R's are aminoethyl groups. A phosphazene compound F is a cyclic phosphazene compound (having a melting point of 132°C) of formula (I), in which n is 3, two of all the R's are chloro groups, two R's are phenyl groups, and the remaining two R's are aminomethyl groups. A phosphazene compound G is a cyclic phosphazene compound (having a melting point of 145°C) of formula (I), in which n is 3 and all the six R's are aminoethyl groups.

(Assembly of Battery)

The fabricated laminated member 11 was inserted into an exterior member (which would later serve as the case 13) made of a heat seal film (aluminum lamination film) and having one open end, and the prepared non-aqueous electrolyte 9 was further injected into the exterior member. After that, the exterior member was evacuated, and the opening of the exterior member was quickly heat sealed to fabricate a non-aqueous electrolyte battery (lithium-ion secondary battery 1) having the structure of a flat laminated battery.

(Evaluation of Flame Retardance - Nail Penetration Test)

The flame retardance (battery safety) was evaluated for the non-aqueous electrolyte battery (laminated battery) fabricated as described above. The flame retardance is evaluated by a nail penetration test. In the nail penetration test, first, a charge - discharge cycle was repeated twice at a current density of 0.1 mA/cm$^2$ in a voltage range of 4.2 to 3.0 V in an environment at 25°C, and further the battery was charged to 4.2 V. After that, a nail made of stainless steel and having a shaft with a diameter of 3 mm was stuck in the center of a side surface of the battery at a speed of 0.5 cm/s at the same temperature of 25°C to examine whether or not the battery ignited (smoked) and whether or not the battery was ruptured or expanded.

(Evaluation of Battery Characteristics - High-Rate Discharge Test)

The battery characteristics were evaluated for the fabricated non-aqueous electrolyte battery (laminated battery). The battery characteristics were evaluated by a high-rate discharge test. In the high-rate discharge test, first, a charge - discharge cycle was repeated under the same conditions as in the nail protrusion test described above, and the battery was charged to 4.2 V. After the battery was charged, a constant current discharge was performed at a current of 24 A to a final voltage of 3.0 V. The thus obtained discharge capacity was defined as the high-rate discharge capacity.

Examples

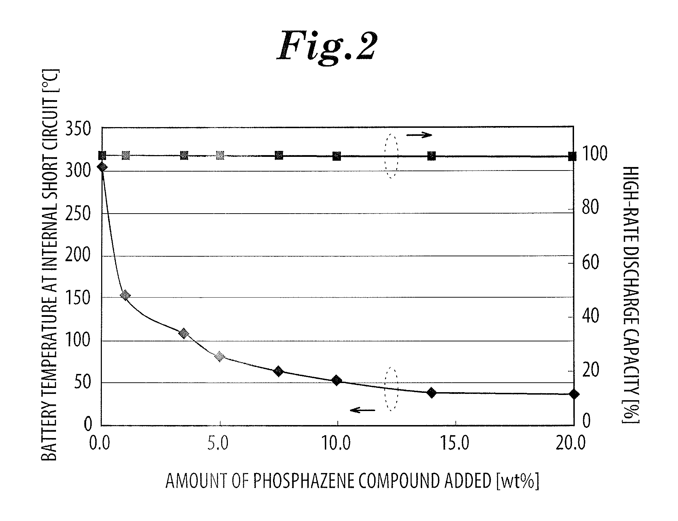

Particles of the cyclic phosphazene compound described above were added as a flame retardant (flame retardant particles) to the non-aqueous electrolyte, and the relationship between the amount of the cyclic phosphazene compound added and the flame retardance of the battery was examined. In the examples, first, the phosphazene compound A was used as the cyclic phosphazene compound, and the flame retardant retardance was evaluated for Experimental Examples 1 to 8 in which the amount of the phosphazene compound A added was varied. The amount of the phosphazene compound A added was represented in the unit of wt% of the phosphazene compound A per 100 wt% of the non-aqueous electrolyte. The results of the evaluation of the flame retardance are shown in Table 1 and Fig. 2.

Table 1

|  | Amount added (wt%) | Ignition / smoke | Rupture /expansion | Battery temperature at internal short circuit (°C) |
|---|---|---|---|---|
| Experimental Example 1 | 0.0 | Smoked | Expanded | 304 |
| Experimental Example 2 | 1.0 | None | Expanded | 153 |
| Experimental Example 3 | 3.5 | None | None | 108 |
| Experimental Example 4 | 5.0 | None | None | 80 |
| Experimental Example 5 | 7.5 | None | None | 63 |
| Experimental Example 6 | 10.0 | None | None | 52 |
| Experimental Example 7 | 14.0 | None | None | 38 |
| Experimental Example 8 | 20.0 | None | None | 36 |

As shown Table 1 and Fig. 2, it was observed that the battery was ignited and expanded in the example in which no phosphazene compound A was added (Experimental Example 1), and it was observed that the battery was expanded in the example in which no phosphazene compound A was added (Experimental Example 1) and in the example in which the phosphazene compound A was added in an amount of 1.0 wt% (Experimental Example 2). In contrast, it was observed that the battery was not ignited (or did not smoke) and the battery was not ruptured (or not expanded) in the examples in which the phosphazene compound A was added in an amount of 3.5 to 20.0 wt% (Experimental Examples 3 to 8). From these results, it was found that thermal runaway at the time of an internal short circuit was suppressed and the safety of the non-aqueous electrolyte battery was enhanced for the non-aqueous electrolyte batteries in which the phosphazene compound A was added in an amount of 3.5 to 20.0 wt%. That is, it was found that the effect of suppressing thermal runaway of the battery was insufficient if the phosphazene compound A was added in an amount of less than 3.5 wt%. Thus, the amount of the phosphazene compound A added is preferably at least 3.5 wt% per 100 wt% of the non-aqueous electrolyte. The upper limit of the amount of the phosphazene compound A added may not be determined. However, while remarkable variations in battery temperature at the time of an internal short circuit are recognized in Table 1 and Fig. 2 if the amount of the phosphazene compound A is 3.5 to 14 wt%, no significant variations in battery temperature at the time of an internal short circuit are recognized if the amount of the phosphazene compound A added is 14 to 20 wt%. Thus, the upper limit of the amount of the phosphazene compound A added may be determined as 14 wt% in consideration of the effect of rendering the battery flame-retardant for the amount of the flame retardant added and the manufacturing cost of the battery.

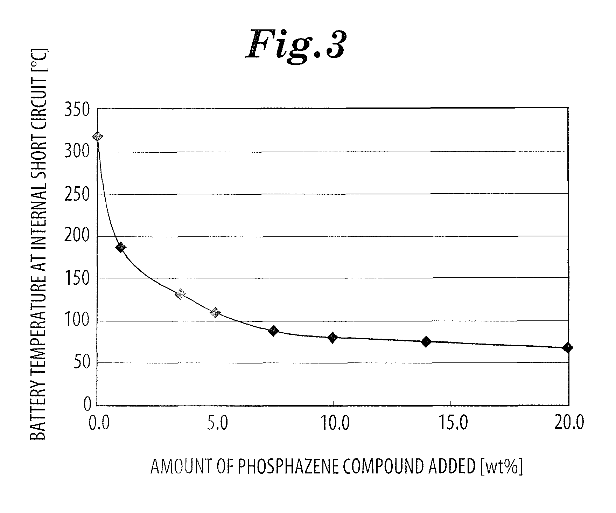

The phosphazene compound B was used as the cyclic phosphazene compound, and the flame retardance was evaluated for Experimental Examples 9 to 16 in which the amount of the phosphazene compound B added was varied. The amount of the phosphazene compound B added was represented in the unit of wt% of the phosphazene compound B per 100 wt% of the non-aqueous electrolyte. The results of the evaluation of the flame retardance are shown in Table 2 and Fig. 3.

Table 2

| | Amount added (wt%) | Ignition / smoke | Rupture / expansion | Battery temperature at internal short circuit (°C) |
|---|---|---|---|---|
| Experimental Example 9 | 0.0 | Smoked | Expanded | 304 |
| Experimental Example 10 | 1.0 | None | Expanded | 163 |
| (Experimental Example 11 | 3.5 | None | None | 105 |
| Experimental Example 12 | 5.0 | None | None | 82 |
| Experimental Example 13 | 7.5 | None | None | 59 |
| Experimental Example 14 | 10.0 | None | None | 51 |
| Experimental Example 15 | 14.0 | None | None | 46 |
| Experimental Example 16 | 20.0 | None | None | 38 |

As shown in Table 2 and Fig. 3, it was observed that the battery smoked and was expanded in the example in which no phosphazene compound B was added (Experimental Example 9). In addition, it was observed that the battery was not ignited (did not smoke) but the battery was expanded in the example in which the phosphazene compound B was added in an amount of 1.0 wt% (Experimental Example 10). In contrast, it was observed that the battery was not ignited (did not smoke) and the battery was not ruptured (or not expanded) in the examples in which the phosphazene compound B was added in an amount of 3.5 to 20.0 wt% (Experimental Examples 11 to 16). From these results, it was found that thermal runaway at the time of an internal short circuit was suppressed and the safety of the non-aqueous electrolyte battery was enhanced also for the non-aqueous electrolyte batteries in which the phosphazene compound B was added in an amount of 3.5 to 20.0 wt%. That is, it was found that the effect of suppressing thermal runaway of the battery was insufficient if the phosphazene compound A was added in an amount of less than 3.5 wt%. Thus, the amount of the phosphazene compound B added is also preferably at least 3.5 wt% per 100 wt% of the non-aqueous electrolyte.

Next, the relationship between the amount of the cyclic phosphazene compound added and the battery characteristics was examined when particles of the cyclic phosphazene compound were added as flame retardant particles to the non-aqueous electrolyte. In the examples, the phosphazene compound A was used as the cyclic phosphazene compound, and the battery characteristics were evaluated (high-rate discharge test) for Experimental Examples 17 to 24 in which the amount of the phosphazene compound A added was varied. Also in this case, the amount of the phosphazene compound A added was represented in the unit of wt% of the phosphazene compound A per 100 wt% of the non-aqueous electrolyte. In addition, the battery characteristics were represented as the high-rate discharge capacity (%) for examples in which the phosphazene compound A was added in an amount of 1.0 to 20.0 wt% (Experimental Examples 18 to 24) compared to the high-rate discharge capacity for an example in which no phosphazene compound A was added (Experimental Example 17), being defined as 100%. The results of the evaluation of the flame retardance are shown in Table 3 and Fig. 2.

Table 3

|  | Amount added (wt%) | High-rate discharge capacity (%) |
| --- | --- | --- |
| Experimental Example 17 | 0.0 | 100 |
| Experimental Example 18 | 1.0 | 100 |
| Experimental Example 19 | 3.5 | 100 |
| Experimental Example 20 | 5.0 | 99.8 |
| Experimental Example 21 | 7.5 | 99.8 |
| Experimental Example 22 | 10.0 | 99.6 |
| Experimental Example 23 | 14.0 | 99.5 |
| Experimental Example 24 | 20.0 | 99.3 |

As shown in Table 3 and Fig. 2, if the high-rate discharge capacity for the example in which no phosphazene compound A was added (Experimental Example 17) is defined as 100%, a high-rate discharge capacity of 100% was maintained in the examples in which the amount of the phosphazene compound A added was 1.0 to 3.5 wt% (Experimental Examples 18 and 19), and a high-rate discharge capacity of equal to or more than 99% was obtained in the examples in which the amount of the phosphazene compound A added was 5.0 to 20.0 wt% (Experimental Examples 20 to 24. There results indicate that an increase in amount of the phosphazene compound A added hardly affects the battery characteristics. That is, the flame retardance of the battery can be improved, without reducing the battery characteristics, by increasing the amount of the phosphazene compound A added according to the use environment.

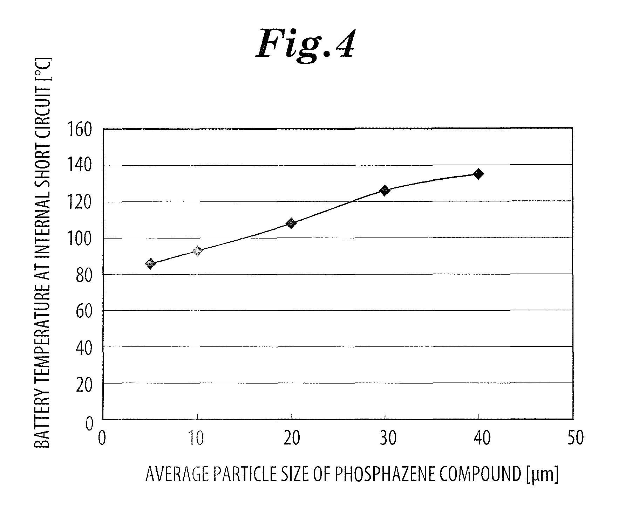

Further, particles of the cyclic phosphazene compound were added as flame retardant particles to the non-aqueous electrolyte, and the relationship between the average particle size of the particles of the cyclic phosphazene compound and the flame retardance of the battery was examined. In the examples, the phosphazene compound A was used as the cyclic phosphazene compound, and the flame retardant retardance was evaluated (nail protrusion test) for Experimental Examples 25 to 29 in which the average particle size of the particles of the phosphazene compound A added was varied. The amount of the phosphazene compound A added was determined as 3.5 wt% (the minimum amount to allow the battery to demonstrate the flame retardant) per 100 wt% of the non-aqueous electrolyte. The results of the evaluation of the flame retardant retardance are shown in Table 4 and Fig. 4.

Table 4

|  | Average particle size (μm) | Ignition / smoke | Rupture / expansion | Battery temperature at internal short circuit (°C) |
| --- | --- | --- | --- | --- |
| Experimental Example 25 | 40.0 | None | Expanded | 135 |
| Experimental Example 26 | 30.0 | None | Expanded | 126 |
| Experimental Example 27 | 20.0 | None | None | 108 |

(continued)

|  | Average particle size (μm) | Ignition / smoke | Rupture / expansion | Battery temperature at internal short circuit (°C) |
|---|---|---|---|---|
| Experimental Example 28 | 10.0 | None | None | 93 |
| Experimental Example 29 | 5.0 | None | None | 86 |

As shown in Table 4 and Fig. 4, it was observed that the battery was expanded in the examples in which the average particle size of the particles of the phosphazene compound A was 40 μm (Experimental Example 25) and 30 μm (Experimental Example 26). In contrast, it was observed that the battery was not ignited (did not smoke) and the battery was not ruptured (or not expanded) in the examples in which the average particle size of the particles of the phosphazene compound A was 5.0 to 20 μm (Experimental Examples 26 to 29). From these results, it was found that thermal runaway at the time of an internal short circuit was suppressed and the safety of the non-aqueous electrolyte battery was enhanced for the non-aqueous electrolyte batteries in which particles of the phosphazene compound A having an average particle size of 5.0 to 20 μm were added. That is, it was found that the effect of suppressing thermal runaway of the battery was insufficient for the non-aqueous electrolyte batteries in which particles of the phosphazene compound A having an average particle size of 5.0 to 20 μm were added. The results indicate that the rate (liquefaction rate) at which a part of the phosphazene compound A is changed from a solid into a liquid is increased when the battery generates an abnormal amount of heat for particles of the phosphazene compound A having an average particle size of 20 μm or less. In other words, in the non-aqueous electrolyte batteries in which particles of the phosphazene compound A having an average particle size of 20 μm or less are added, it is considered that the increased liquefaction rate of the particles of the phosphazene compound A also increases the rate at which the liquefied phosphazene compound A is dissolved or dispersed into the non-aqueous electrolyte to improve the effect of suppressing thermal runaway of the battery. For particles of the phosphazene compound A having an average particle size of more than 20 μm, on the other hand, it is considered that the liquefaction rate of the phosphazene compound A is so slow even when the battery generates an abnormal amount of heat as to hinder the effect of suppressing thermal runaway of the battery. Thus, the average particle size of the particles of the phosphazene compound A is preferably 20 μm or less in consideration of the relationship between the average particle size of the flame retardant and the effect of rendering the battery flame-retardant. The average particle size of the particles of the phosphazene compound A is preferably in the range of 5 to 20 μm, taking into the consideration the particles of the phosphazene compound A that can be manufactured.

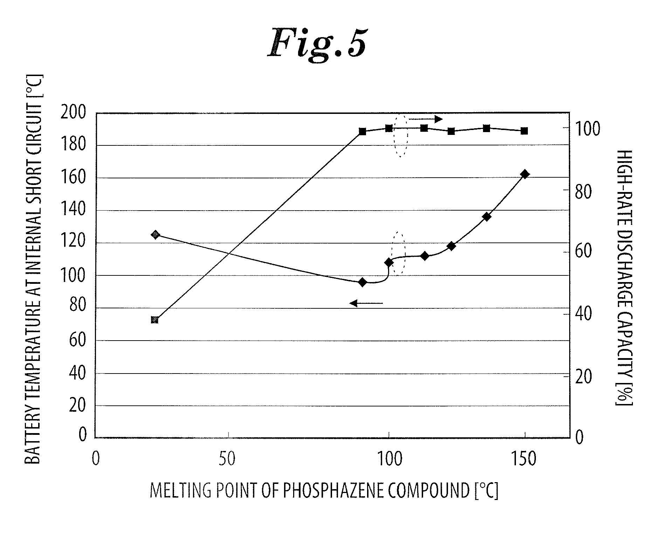

In addition, particles of the cyclic phosphazene compound were added as flame retardant particles to the non-aqueous electrolyte, and the relationship between the melting point of the particles of the cyclic phosphazene compound and the flame retardance of the battery was examined. In the examples, phosphazene compounds A to G (Experimental Examples 30 to 36) having different melting points were used as the cyclic phosphazene compound, and subjected to evaluation of the flame retardance (nail protrusion test) and evaluation of the battery characteristics (high-rate discharge test). The amount of any of the phosphazene compounds A to G added was determined as 3.5 wt% (the minimum amount to allow the battery to demonstrate the flame retardance) per 100 wt% of the non-aqueous electrolyte. In addition, the battery characteristics were represented as the high-rate discharge capacity (%) for each of the phosphazene compounds compared to the high-rate discharge capacity for the phosphazene compound A (Experimental Example 32) with good battery characteristics discussed above and shown in Table 3 and Fig. 2, being defined as 100%. The results of the evaluation of the flame retardance and the evaluation of the battery characteristics are shown in Table 5 and Fig. 5.

Table 5

|  | Phosphazene compound | Melting point (°C) | Ignition / smoke | Rupture / expansion | Battery temperature at internal short circuit (°C) | High-rate discharge capacity (%) |
|---|---|---|---|---|---|---|
| Experimental Example 30 | C | 20 | None | Expanded | 125 | 38 |
| Experimental Example 31 | D | 90 | None | None | 96 | 99 |

(continued)

| | Phosphazene compound | Melting point (°C) | Ignition / smoke | Rupture / expansion | Battery temperature at internal short circuit (°C) | High-rate discharge capacity (%) |
|---|---|---|---|---|---|---|
| Experimental Example 32 | A | 99 | None | None | 108 | 100 |
| Experimental Example 33 | B | 111 | None | None | 112 | 100 |
| Experimental Example 34 | E | 120 | None | None | 118 | 99 |
| Experimental Example 35 | F | 132 | None | Expanded | 136 | 100 |
| Experimental Example 36 | G | 145 | None | Expanded | 162 | 99 |

As shown in Table 5 and Fig. 5, it was observed that the battery was expanded for the phosphazene compound C (Experimental Example 30) having a melting point of 20°C, the phosphazene compound F (Experimental Example 35) having a melting point 132°C, and the phosphazene compound G (Experimental Example 36) having a melting point of 145°C. Meanwhile, the high-rate discharge capacity was significantly reduced for the phosphazene compound C (Experimental Example 30) having a melting point of 20°C. In contrast, it was observed that the battery was not ignited (did not smoke), the battery was not ruptured (or not expanded), and the high-rate discharge capacity was not reduced for the phosphazene compounds A, B, D, and E (Experimental Examples 31 to 34) having a melting point of 90 to 120°C. From these results, it was found that thermal runaway at the time of an internal short circuit was suppressed (the safety of the battery was enhanced) without reducing the battery characteristics for the non-aqueous electrolyte batteries in which a phosphazene compound having a melting point of 90 to 120°C was added. That is, it was found that the battery characteristics or the effect of suppressing thermal runaway of the battery was insufficient for the non-aqueous electrolyte batteries in which a phosphazene compound having a melting point of less than 90°C (that is liquid at normal temperature) or more than 120°C was added. A phosphazene compound having a melting point of less than 90°C (that is liquid at normal temperature) is dissolved in the electrolyte to increase the viscosity of the electrolyte. Therefore, movement of lithium ions in the electrolyte is hindered to reduce the high-rate discharge characteristics. A phosphazene compound having a melting point of less than 90°C is liquefied to be further volatilized (or evaporated) when the battery generates an abnormal amount of heat (when it is necessary for the battery to demonstrate the flame retardance). Meanwhile, a phosphazene compound having a melting point of more than 120°C is not easily liquefied and remains solid and thus is not easily dissolved (or dispersed) in a non-aqueous electrolyte even when the battery generates an abnormal amount of heat (when it is necessary for the battery to demonstrate the flame retardance). Such tendencies of the phosphazene compounds are considered to reduce the effect of suppressing thermal runaway at the time of an internal short circuit. Further, a phosphazene compound having a melting point of less than 90°C (that is liquid at normal temperature) is dissolved (or dispersed) in the non-aqueous electrolyte to increase the viscosity of the non-aqueous electrolyte, for example, even when the battery is normal (when it is not necessary for the battery to demonstrate the flame retardance). Such a tendency of the phosphazene compound is considered to reduce the battery characteristics. Thus, a phosphazene compound having a melting point of 90 to 120°C is preferably used as the cyclic phosphazene compound for use as a flame retardant.

An embodiment and examples of the present invention have been specifically described above. However, the present invention is not limited to the embodiment and the examples, and may be changed based on the technical concept of the present invention as a matter of course.

INDUSTRIAL APPLICABILITY

The present invention employs a number of flame retardant particles made of a material that exists as a solid and does not perform a function of suppressing combustion when the temperature of a non-aqueous electrolyte is equal to or less than a reference temperature at which the non-aqueous electrolyte is likely to start combustion and that is at least partially liquefied and performs a function of suppressing combustion when the temperature of the non-aqueous electrolyte is more than the reference temperature. A large number of such flame retardant particles are added to the non-aqueous electrolyte. Therefore, it is possible to provide a non-aqueous electrolyte battery whose battery characteristics are not significantly reduced and which performs a function of suppressing ignition (rupture) of the non-aqueous electrolyte only when the temperature inside the battery is increased.

REFERENCE SIGN LIST

| | |
|---|---|
| 1 | lithium-ion secondary battery |
| 3 | positive electrode |
| 5 | negative electrode |
| 7 | separator |
| 9 | non-aqueous electrolyte |
| 11 | laminated member |
| 13 | case |

**Claims**

1. A non-aqueous electrolyte battery comprising:

   a non-aqueous electrolyte; and
   a flame retardant added to the non-aqueous electrolyte to suppress ignition of the non-aqueous electrolyte due to increased temperature, the frame retardant being formed of a large number of flame retardant particles made of a material that exists as a solid and does not perform a function of suppressing ignition when the temperature of the non-aqueous electrolyte is equal to or less than a reference temperature at which the non-aqueous electrolyte is likely to ignite and that is at least partially liquefied and performs a function of suppressing ignition when the temperature of the non-aqueous electrolyte is higher than the reference temperature.

2. The non-aqueous electrolyte battery according to claim 1, wherein
   the flame retardant particles exist as a solid in the non-aqueous electrolyte when an internal temperature of the non-aqueous electrolyte battery is equal to or less than 90°C.

3. The non-aqueous electrolyte battery according to claim 2, wherein
   the melting point of the flame retardant particles is in the range of 90 to 120°C.

4. The non-aqueous electrolyte battery according to claim 2, wherein
   the flame retardant particles are particles of a phosphazene compound.

5. The non-aqueous electrolyte battery according to claim 4, wherein
   the phosphazene compound is a cyclic phosphazene compound of formula (I):

$$(NPR_2)n \quad \cdots \quad (I)$$

   where R's are independently a halogen, an alkoxy group, an aryloxy group, or an amino group, and n is an integer of 3 or 4.

6. The non-aqueous electrolyte battery according to claim 5, wherein in the phosphazene compound of formula (I),
   the n is an integer of 3; and
   four of the R's are chloro groups and the remaining two R's are aminomethyl groups.

7. The non-aqueous electrolyte battery according to claim 5, wherein in the phosphazene compound of formula (I),
   the n is an integer of 3; and
   all the R's are phenoxy groups.

8. The non-aqueous electrolyte battery according to claim 5, wherein
   the amount of the particles of the phosphazene compound added is 3.5 wt% or more per 100 wt% of the non-aqueous electrolyte.

9. The non-aqueous electrolyte battery according to claim 8, wherein
   the average particle size of the particles of the phosphazene compound is 20 $\mu$m or less.

*Fig.1A*  *Fig.1B*

*Fig.2*

## *Fig.3*

BATTERY TEMPERATURE AT INTERNAL SHORT CIRCUIT [°C]

AMOUNT OF PHOSPHAZENE COMPOUND ADDED [wt%]

# *Fig.4*

# Fig.5

<div align="center">

**INTERNATIONAL SEARCH REPORT**

</div>

| | International application No. |
|---|---|
| | PCT/JP2011/070255 |

**A. CLASSIFICATION OF SUBJECT MATTER**
*H01M10/0567(2010.01)i*

According to International Patent Classification (IPC) or to both national classification and IPC

**B. FIELDS SEARCHED**

Minimum documentation searched (classification system followed by classification symbols)
H01M10/0567

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2007-115583 A (Sony Corp.),<br>10 May 2007 (10.05.2007),<br>claims 1, 2; paragraphs [0003], [0004], [0026], [0027]<br>(Family: none) | 1-5,8<br>6,7,9 |
| A | JP 2006-185829 A (Bridgestone Corp.),<br>13 July 2006 (13.07.2006),<br>claim 1; paragraphs [0017], [0041] to [0049]<br>(Family: none) | 1-9 |
| A | JP 10-021958 A (Shin-Kobe Electric Machinery Co., Ltd.),<br>23 January 1998 (23.01.1998),<br>claim 2<br>(Family: none) | 1-9 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 November, 2011 (25.11.11) | 06 December, 2011 (06.12.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| | International application No. |
|---|---|
| | PCT/JP2011/070255 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2000-173650 A  (Hitachi Maxell, Ltd.), 23 June 2000 (23.06.2000), paragraph [0016] (Family: none) | 1-9 |
| A | JP 2000-100421 A  (Hitachi Maxell, Ltd.), 07 April 2000 (07.04.2000), paragraph [0019] (Family: none) | 1-9 |

Form PCT/ISA/210 (continuation of second sheet) (July 2009)

**EP 2 615 679 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6013108 A
- JP 11144757 A
- JP 2000030740 A
- JP 2001023687 A
- JP 2000173619 A